# EUROPÄISCHE PATENTSCHRIFT

(11) **EP 1 846 488 B1**
(45) Veröffentlichungstag und Bekanntmachung des Hinweises auf die Patenterteilung: **29.09.2010**
(21) Anmeldenummer: 06706490.7
(22) Anmeldetag: 30.01.2006
(51) Int. Cl.: C08K 3/22, C08K 5/098, C08L 27/04

(54) **VERFAHREN ZUR PASTILLIERUNG VON STABILISATOR-SCHMELZEN**
METHOD FOR SHAPING STABILIZER MELTS INTO PASTILLES
PROCEDE POUR METTRE SOUS FORME DE PASTILLES DES MATIERES DE STABILISATION EN FUSION

(30) Priorität: 04.02.2005 DE 102005005281
(43) Veröffentlichungstag der Anmeldung: 24.10.2007
(73) Patentinhaber: Baerlocher GmbH, 85716 Unterschleissheim (DE)
(72) Erfinder: FOKKEN, Stefan, 85244 Biberbach (DE)
(74) Vertreter: Fiesser, Gerold Michael
(86) Internationale Anmeldenummer: PCT/EP2006/000785
(87) Internationale Veröffentlichungsnummer: WO 2006/082009

(56) Entgegenhaltungen:
- WO-A-03/016395
- CN-A- 1 079 495
- DE-A1- 4 305 944
- US-A- 4 248 747
- US-A- 5 997 768

## Beschreibung

Die vorliegende Erfindung betrifft Verfahren zur Pastillierung von Ca/Zn-Schmelzen.

Bekanntermaßen neigen halogenhaltige Kunststoffe bei thermischer Belastung während der Verarbeitung oder im Langzeitgebrauch zu unerwünschten Zersetzungs- und Abbaureaktionen. Bei dem Abbau halogenierter Polymerer, insbesondere bei PVC, entsteht Salzsäure, die aus dem Polymerstrang eliminiert wird, woraus ein verfärbter, ungesättigter Kunststoff mit farbgebenden Polyensequenzen resultiert.

Besonders problematisch wirkt sich dabei aus, dass halogenhaltige Polymere erst bei einer relativ hohen Verarbeitungstemperatur die zur Verarbeitung notwendigen rheologischen Rahmenbedingungen aufweisen. Bei derartigen Temperaturen setzt jedoch bei unstabilisierten Polymeren bereits eine merkliche Zersetzung des Polymeren ein, die sowohl zu der oben beschriebenen unerwünschten Farbänderung als auch zu einer Änderung der Materialeigenschaften führt. Darüber hinaus kann die aus nicht stabilisierten, halogenhaltigen Polymeren bei einer derartigen Verarbeitungstemperatur freigesetzte Salzsäure zu einer merklichen Korrosion der Verarbeitungsanlagen führen. Dieser Vorgang spielt insbesondere dann eine Rolle, wenn es bei der Verarbeitung derartiger halogenierter Polymerer zu Formkörpern, beispielsweise durch Extrusion, zu Produktionsunterbrechungen kommt und die Polymermasse für eine längere Zeitdauer im Extruder verweilt. Während dieser Zeit kann es zu den obengenannten Zersetzungsreaktionen kommen, wodurch die im Extruder befindliche Charge unbrauchbar wird, und der Extruder gegebenenfalls geschädigt wird.

Weiterhin neigen Polymere, die einer derartigen Zersetzung unterworfen sind dazu, Anhaftungen an den Verarbeitungsanlagen zu bilden, die nur schwierig wieder zu entfernen sind.

Um die genannten Probleme zu lösen, werden halogenhaltigen Polymeren zur Verarbeitung üblicherweise als sogenannte Stabilisatoren Verbindungen zugesetzt, welche die obengenannten Zersetzungsreaktionen möglichst weitgehend verhindern sollen. In der Regel handelt es sich bei derartigen Stabilisatoren um Feststoffe, welche dem zu verarbeitenden Polymeren vor seiner Verarbeitung zugegeben werden.

Als Stabilisatoren werden neben Pb- und Sn-Verbindungen vor allem Ca/Zn-Verbindungen eingesetzt. Dabei hat sich die Verwendung von Ca(OH)₂ als Stabilisator in vielen Fällen als besonders günstig herausgestellt. Dies findet seine Begründung in der hohen Basizität des Ca(OH)₂, welches durch diese Eigenschaft in der Lage ist, das bei der Verarbeitung und Alterung freigesetzte HCl zu binden und so eine weitere Zerstörung des halogenhaltigen Polymeren und insbesondere eine Verfärbung desselben zu verhindern.

Der Einsatz von Stabilisatorzusammensetzungen bei der Verarbeitung von halogenhaltigen Polymeren umfasst in der Regel das Vermischen von halogenhaltigen Polymeren und Stabilisatorzusammensetzungen dergestalt, dass eine möglichst innige Durchmischung von Stabilisatorzusammensetzungen und halogenhaltigen Polymeren erfolgt. Hierzu wurden in der Vergangenheit üblicherweise pulverförmige Stabilisatorzusammensetzungen eingesetzt. Darüber hinaus sind jedoch auch Stabilisatorzusammensetzungen bekannt, die beispielsweise in Form von Granulaten oder in Pastillenform vorliegen und trotzdem eine gute Verteilung im halogenhaltigen Polymeren im Rahmen des Verarbeitungsprozesses ermöglichen. Eine derartige Konfektionierung von Stabilisatorzusammensetzungen weist für den Anwender beispielsweise den Vorteil auf, dass solche Stabilisatorzusammensetzungen im Rahmen der Verarbeitung üblicherweise ein deutlich verbessertes Staubverhalten zeigen. Mit einem derart verbesserten Staubverhalten geht jedoch oft eine Reduzierung des Aufwands zur Reinhaltung der Arbeitsluft einher, die sich wiederum positive auf der Kostenseite niederschlägt.

Das Problem bei der Verwendung derartig konfektionierter Zusammensetzungen besteht allerdings darin, dass die Herstellung entsprechender Stabilisatorzusammensetzungen häufig mit der Einwirkung von Wärme verbunden ist. Daraus ergibt sich jedoch, dass nur solche Stabilisatorzusammensetzungen einer Konfektionierung zugänglich sind, die hinsichtlich ihrer Zusammensetzung eine entsprechende Wärmeeinwirkung erlauben, ohne dass sich die Wirksamkeit der Stabilisatorzusammensetzung aufgrund von Zersetzungserscheinungen verschlechtert oder zumindest mehr als tolerierbar verschlechtert.

Aufgrund dieser Problematik ließen sich bislang Stabilisatorzusammensetzungen, die Ca(OH)₂ enthalten, nur schwer bzw. überhaupt nicht konfektionieren, da das Ca(OH)₂ auf Grund seiner hohen Basizität bei den bei der Verarbeitung üblichen Temperaturen von 130°C und mehr zur Zerstörung anderer Bestandteile der Stabilisierungsschmelze führt.

Der vorliegenden Erfindung lag daher die Aufgabe zugrunde, ein Verfahren zur Konfektionierung, insbesondere zur Pastillierung von Stabilisator-Schmelzen, beispielsweise von Ca/Zn-Schmelzen, bereitzustellen, bei dem Stabilisatorzusammensetzungen erhalten werden, deren weitere Bestandteile durch das Verfahren nicht oder zumindest nicht mehr als hinsichtlich des äußeren Erscheinungsbilds oder der Stabilisierungswirkung oder beidem tolerierbar verändert werden. Es war eine weitere Aufgabe der Erfindung, ein Verfahren bereitzustellen, welches es ermöglicht, gut handhabbare Stabilisatorzubereitungen herzustellen. Diese Verfahren sollten es als weitere Aufgabe ermöglichen, auch CaO oder Ca(OH)₂ oder deren Gemisch einzusetzen.

Überraschend wurde nun gefunden, dass diese Aufgaben durch ein Verfahren zur Konfektionierung, insbesondere zur Pastillierung von Schmelzen, bei dem die Schmelze höchstens 10 Gew.-% eines oder mehrerer Polyole und höchstens 10 Gew.-% eines oder mehrerer langkettiger Ester enthält, gelöst werden.

Gegenstand der vorliegenden Erfindung ist daher ein Verfahren zur Konfektionierung von CaO oder Ca(OH)₂ oder beides enthaltenden Schmelzen, bei dem eine CaO oder Ca(OH)₂ oder beides und mindestens eine organische Verbindung oder ein Gemisch aus zwei oder mehr solcher Verbindungen mit einem Schmelzpunkt oder Erweichungspunkt von weniger als 200 °C enthaltende Schmelze portioniert und anschließend unter Erhalt eines Schmelzformkörpers abgekühlt wird, wobei die Schmelze höchstens 10 Gew.-% eines oder mehrerer Polyole und höchstens 10 Gew.-% eines oder mehrerer langkettiger Ester enthält, und wobei der Anteil an CaO oder Ca(OH)₂ oder beidem 2 bis 80 Gew.-% beträgt, bezogen auf den Anteil an organischer Verbindung mit einem Schmelzpunkt oder Erweichungspunkt von weniger als 200 °C und CaO oder Ca(OH)₂ oder beidem in der Schmelze, und wobei unter einem langkettigen Ester ein Ester verstanden wird, wie er durch Reaktion einer geeigneten organischen Säure mit einem geeigneten Alkohol in dem Fachmann bekannter Weise erhalten werden kann, und wobei beide Kohlenstoffgruppen in Säure bzw. Alkohol jeweils mindestens 4 Kohlenstoffatome umfassen.

Unter "Konfektionierung" wird im Rahmen der vorliegenden Erfindung jegliche Art der Formgebung verstanden, d.h. jeder Vorgang, welcher dazu geeignet ist, einen plastischen Gegenstand in eine bestimmte, im Wesentlichen dauerhafte Form zu bringen. Dies kann dadurch geschehen, dass eine thermoplastische Masse oder eine Schmelze in eine Form gegeben wird und dort unter Abkühlen oder Abkühlen lassen in der so gewonnenen Form fixiert wird, wie es z.B. beim Spritzgießen der Fall ist. Die Formgebung kann aber auch dadurch erfolgen, dass die thermoplastische Masse oder die Schmelze mehr oder weniger fein verteilt wird und sich beim Abkühlen in der so erlangten Form fixiert, - dies ist z.B. durch den Einsatz von Sprühtürmen möglich, bei dem im Wesentlichen kugelförmige Formen erhalten werden. Darüber hinaus ist es auch möglich, die thermoplastische Masse oder die Schmelze nach dem Erstarren weiter in ihrer Form zu verändern, wobei beispielsweise Zylinder, Quader, Würfel, Hexagone, Pastillen und andere Formen erhalten werden können. Darüber hinaus sind weitere Formgebungsverfahren denkbar und werden als Bestandteil der vorliegenden Erfindung angesehen.

Unter "CaO oder Ca(OH)₂ oder deren Gemisch enthaltenden Schmelzen" werden im Rahmen der vorliegenden Erfindung jegliche Art von Schmelzen verstanden, die CaO oder Ca(OH)₂ oder deren Gemisch und mindestens eine organische Verbindung mit einem Schmelzpunkt von weniger als 200 °C enthalten.

Es hat sich im Rahmen der vorliegenden Erfindung überraschenderweise herausgestellt, dass sich Stabilisatorzusammensetzungen für halogenhaltige Polymere, die CaO oder Ca(OH)₂ oder deren Gemisch enthalten, dann besonders gute konfektionieren lassen, wenn sie hinsichtlich ihres Gehalts an Polyolen oder langkettigen Estern eine bestimmte Obergrenze nicht überschreiten.

Unter einem "Polyol" wird im Rahmen der vorliegenden Erfindung eine Verbindung verstanden, die mindestens zwei alkoholische Gruppen trägt. Die einfachsten derartigen Verbindungen sind demnach Ethan-1,2-diol, Propan-1,2-diol und Propan-1,3-diol, Butan-1,2-diol, Butan-1,3-diol und Butan-1,4-diol usw. Selbstverständlich können die Verbindungen auch mehr als zwei alkoholische Gruppen ragen, wie Propan-1,2,3-triol, Butan-1,2,3-triol und Butan-1,2,4-triol, wobei auch hier wieder nur die einfachsten Vertreter genannt sind, was aber nicht dahingehend zu interpretieren ist, dass die Aufzählung abschließend ist, - vielmehr sind alle weiteren Vertreter dieser Gruppen eingeschlossen. Es ist auch unerheblich, ob es sich um primäre, sekundäre oder tertiäre alkoholische Gruppen handelt. Die Kohlenstoffgrundkörper (in den aufgezählten Beispielen also Ethan, Propan und Butan) können außerdem auch verzweigt sein, wobei auch die Verzweigungen alkoholische Gruppen tragen können oder die Kohlenstoffgrundkörper können über Sauerstoffatome miteinander verknüpft sein. Nichtlimitierende Beispiele für die erste Gruppe sind 2-Methylbutan-1-ol, 2-Methylbutan-1,2-diol und 2-Hydroxymethylbutan-1,4-ol, sowie für die zweite Gruppe Ethylenglycol und Propylenglycol.

Zur besseren Veranschaulichung seien nun noch einige weitere Polyole genannt, die unter die oben angegebene Definition fallen und üblicherweise in derartigen Schmelzen Verwendung finden können: Pentaerythrit, Dipentaerythrit, Tripentaerythrit, Bistrimethylolpropan, Inosit, Polyvinylalkohol, Bistrimetylolethan, Trimethylolpropan, Sorbit, Maltit, Isomaltit, Lactit, Lycasin, Mannit, Lactose, Leucrose, Tris-(hydroxymethyl)isocyanurat, Palatinit, Tetramethylolcyclohexanol, Tetramethylolcyclopentanol, Tetramethylolcycloheptanol, Glyzerin, Diglyzerin, Polyglyzerin, Thiodiglyzerin oder 1-0-α-D-Glycopyranosyl-D-mannit-dihydrat.

Unter einem "langkettigen Ester" wird im Rahmen der vorliegenden Erfindung ein Ester verstanden, wie er durch Reaktion einer geeigneten organischen Säure mit einem geeigneten Alkohol in dem Fachmann bekannter Weise erhalten werden kann, wobei die zwei Kohlenstoffgruppen in Säure bzw. Alkohol mindestens vier Kohlenstoffatome umfassen. Die mindestens zwei Kohlenstoffgruppen in Säure bzw. Alkohol werden dabei zum Einen durch den Grundkörper der korrespondierenden Säure und zum Anderen durch den Grundkörper des korrespondierenden Alkohols gebildet. Beispielsweise umfasst mindestens eine dieser beiden Grundkörper mindestens 6 Kohlenstoffatome oder mindestens 12 Kohlenstoffatome oder mindestens 18 Kohlenstoffatome.

Im Rahmen einer weiteren Ausführungsform der vorliegenden Erfindung umfassen beide Kohlenstoffgruppen beispielsweise jeweils mindestens 4, beispielsweise mindetsens 6 oder mindestens 12 oder mindestens 18 Kohlenstoffatome. Nichtabschließende Beispiele für derartige Ester sind demnach solche, die z.B. aus der Reaktion von gesättigten Alkoholen, wie Butyl-, Pentyl-, Hexyl-, Heptyl-, Octyl-, Nonyl-, Decyl-, Cetyl-, Ceryl- und Myricylalkohol oder von ungesättigten Alkoholen mit gesättigten Säuren, wie Butter-, Valerian-, Capron-, Capryl-, Caprin-, Laurin-, Önanth-, Octan-, Neodecan-, 2-Ethylhexan-, Pelargon-, Decan-, Undecan-, Dodecan-, Tridecan-, Myristyl-, Palmitin-, Staerin-, Behen-, 3,6-Dioxaheptan- und 3,6,9-Trioxadecansäure, oder mit ungesättigten Säuren, wie Methacryl-, Croton-, Isocroton-, Vinylessig-, Öl-, Elaidin- und Propinsäure, oder mit aromatischen Säuren, wie Benzoe-, p-tert-Butylbenzoe-, Tolyl-, Dimethylbenzoe-, Ethylbenzoe-, n-Propylbenzoe-, Salicyl-, p-tert-Octylsalicyl-, Sorbinsäure, oder mit divalenten Carbonsäuren, wie Malon-, Malein-, Wein-, Zimt-, Mandel-, Äpfel-, Glykol- und Polyglykoldicarbonsäuren mit einem Polymerisationsgrad von etwa 10 bis etwa 12, Phthal-, Isophthal-, Terephthal- oder Hydroxyphthalsäure, oder mit tri- oder tetravalenten Carbonsäuren, wie Hemimellith-, Trimellith- und Pyromellithsäure unter der Voraussetzung erhalten werden können, dass nicht eine Säure und ein Alkohol miteinander kombiniert werden, die beide jeweils weniger als vier Kohlenstoffatome umfassen. Auch wenn es sich hierbei nur um eine der Veranschaulichung dienende nicht abschließende Aufzählung handelt, sei doch darauf hingewiesen, dass jeweils alle denkbaren Formen der Säuren bzw. Alkohole allein oder als Mischung vorliegen können, z.B. steht "Valeriansäure" nicht nur für n-Valeriansäure, sondern auch für Isovaleriansäure, Ethyl-methyl-essigsäure und Trimethylessigsäure.

Ein Verfahren wie oben beschrieben ist beispielsweise dann geeignet, wenn die Stabilisator-Schmelze ein oder mehrere Polyole oder ein oder mehrere langkettige Ester unabhängig voneinander in einer Menge von nicht mehr als 1 Gew.-%, beispielsweise in einer Menge von nicht mehr als 0,1 Gew.-% enthält. Vorzugsweise ist die Stabilisator-Schmelze im Rahmen eines erfindungsgemäßen Verfahrens im wesentlichen frei von Polyolen oder von langkettigen Estern oder von beidem.

Im Rahmen des erfindungsgemäßen Verfahrens zur Konfektionierung von Stabilisatorzusammensetzungen wird eine Schmelze hergestellt, die mindestens CaO oder Ca(OH)₂ oder beides und mindestens eine organische Verbindung mit einem Schmelzpunkt von weniger als 200 °C enthält.

Als organische Verbindung mit einem Schmelzpunkt von weniger als 200 °C eignet sich grundsätzlich jede beliebige organische Verbindung, die einerseits dazu geeignet ist, eine konfektionierbare Schmelze zu erzeugen und andererseits als Bestandteil einer Stabilisatorzusammensetzung zur Stabilisierung halogenhaltiger Polymerer zumindest keine nachteiligen oder keine mehr als vermeidbar nachteiligen Eigenschaften aufweist. Vorzugsweise ist eine derartige organische Verbindung mit einem Schmelzpunkt von weniger als 200 °C gegenüber weiteren in einer solchen Schmelze vorliegenden Verbindungen, insbesondere gegenüber CaO oder Ca(OH)₂ oder beidem inert oder zumindest im wesentlichen inert.

Als organisch Verbindungen mit einem Schmelzpunkt von weniger als 200 °C eignen sich insbesondere Metallseifen von gesättigten, ungesättigten, geradkettigen oder verzweigten, aromatischen, cycloaliphatischen oder aliphatischen Carbonsäuren mit vorzugsweise etwa 2 bis etwa 44 C-Atomen in Frage. Hinsichtlich geeigneter Carbonsäuren wird auf die oben bei der Definition der "langkettigen Ester" angegebene nicht abschließende Liste von Carbonsäuren verwiesen.

Unter den gesättigten, ungesättigten, geradkettigen oder verzweigten, aromatischen, cycloaliphatischen oder aliphatischen Carbonsäuren mit vorzugsweise etwa 2 bis etwa 44 C-Atomen haben sich die gesättigten Carbonsäuren als gut geeignet herausgestellt.. Beispielsweise eignen sich gesättigte lineare Carbonsäuren mit etwa 6 bis etwa 28, beispielsweise etwa 12 bis etwa 24 oder etwa 14 bis etwa 20 Kohlenstoffatomen, beispielsweise mit etwa 14, 16 oder 18 Kohlenstoffatomen.

Im Rahmen einer weiteren Ausführungsform der vorliegenden Erfindung werden als organische Verbindungen mit einem Schmelzpunkt von weniger als 200 °C vorzugsweise Metallseifen eingesetzt, deren Anionen sich von gesättigten oder ungesättigten Carbonsäuren oder Hydroxycarbonsäuren mit etwa 8 bis etwa 20 C-Atomen ableiten. Besonders bevorzugt sind hierbei Stearate, Oleate, Laurate, Palmitate, Behenate, Versatate, p-tert-Butylbenzoate oder (Iso)Octanoate oder Gemische aus zwei oder mehr davon.

Als Metallkationen weisen die als Zusatzstoffe geeigneten Metalloxide, Metallhydroxide oder Metallseifen vorzugsweise ein zweiwertiges Kation auf, besonders geeignet sind die Kationen von Magnesium, Barium, Aluminium, Calcium oder Zink oder deren Gemische, insbesondere die Kationen von Calcium oder Zink sowie deren Gemische.

Ebenfalls als organische Verbindungen mit einem Schmelzpunkt von weniger als 200 °C geeignet sind beispielsweise Paraffinwachse, Polyethylenwachse, Amidwachse, Chlorparaffine oder als Gleitmittel bezeichnete Verbindungen, wie sie beispielsweise in "Kunststoffadditive", R. Gächter/H. Müller, Carl Hanser Verlag, 3. Auflage, 1989, S. 478 - 488 beschrieben werden. Weiterhin als organische Verbindungen mit einem Schmelzpunkt von weniger als 200 °C geeignet sind beispielsweise Fettketone wie sie in der DE 4,204,887 beschrieben werden. Auf die genannten Dokumente wird hiermit ausdrücklich Bezug genommen, deren Gleitmittel betreffende Offenbarung wird als Bestandteil der Offenbarung des vorliegenden Textes betrachtet. Weiterhin als organische Verbindungen geeignet sind chlorierte Kohlenwasserstoffe (Paraffine) oder Kohlenwasserstoffe wie sie in "Kunststoffadditive", R. Gächter/H. Müller, Carl Hanser Verlag, 3. Auflage, 1989, Kapitel 5.9.14.2, S. 422-425 und Kapitel 5.9.14.1, S. 422, beschrieben sind. Ebenfalls als organische Verbindungen mit einem Schmelzpunkt von weniger als 200 °C geeignet sind darüber hinaus in höchstens geringen Mengen Gleitmittel auf Esterbasis wie Stearylstearat, Distearylphthalat und dergleichen, wie sie in "Kunststoffadditive", R. Gächter/H. Müller, Carl Hanser Verlag, 3. Auflage, 1989 beschrieben werden, sofern diese Gleitmittel keine negative Auswirkung auf das Ziel der Erfindung aufweisen.

Im Rahmen einer weiteren Ausführungsform der vorliegenden Erfindung enthält die Stabilisator-Schmelze Calciumstearat oder Zinkstearat oder deren Gemisch als Gemisch aus zwei oder mehr organischen Verbindungen mit einem Schmelzpunkt von weniger als 200 °C .

Der Gehalt einer im Rahmen der vorliegenden Erfindung einsetzbaren Schmelze an organischer Verbindung mit einem Schmelzpunkt oder Erweichungspunkt von weniger als 200 °C und CaO oder Ca(OH)₂ oder beidem beträgt insgesamt etwa 0,1 bis etwa 100 Gew.-%, bezogen auf die gesamte Schmelze. Beispielsweise beträgt der Gehalt einer im Rahmen der vorliegenden Erfindung einsetzbaren Schmelze an organischer Verbindung mit einem Schmelzpunkt oder Erweichungspunkt von weniger als 200 °C und CaO oder Ca(OH)₂ oder beidem etwa 1 bis etwa 100 oder etwa 5 bis etwa 99 oder etwa 10 bis etwa 90 oder etwa 20 bis etwa 85 oder etwa 30 bis etwa 80 oder etwa 40 bis etwa 70 oder etwa 50 bis etwa 60 Gew.-%

Bezogen auf den Anteil an organischer Verbindung mit einem Schmelzpunkt oder Erweichungspunkt von weniger als 200 °C und CaO oder Ca(OH)₂ oder beidem in der Schmelze wird der Anteil an CaO oder Ca(OH)₂ oder beidem so gewählt, dass eine Konfektionierung der Schmelze im Rahmen des erfindungsgemäßen Verfahrens möglich ist. So beträgt der Anteil an CaO oder Ca(OH)₂ oder beidem 2 bis 80 Gew.-% oder 2 bis etwa 60 Gew.-% oder 2 bis etwa 40 Gew.-%.

Im Rahmen eines erfindungsgemäßen Verfahrens zur Herstellung von konfektionierbaren Stabilisator-Schmelzen kann die Herstellung der Schmelze prinzipiell auf beliebige Weise erfolgen. So können beispielsweise alle Bestandteile der Schmelze in einer entsprechenden Apparatur vorgelegt werden, wobei anschließend auf geeignete Weise Wärme eingetragen und die Vorlage damit zur Schmelze gebracht wird. Es ist jedoch im Rahmen der vorliegenden Erfindung ebenso möglich, zunächst beispielsweise die schmelzbaren Bestandteile der Schmelze vorzulegen, diese aufzuschmelzen und anschließend die bei der Schmelzetemperatur nicht schmelzenden Bestandteile hinzuzufügen.

Das erfindungsgemäße Verfahren kann als Batch-Verfahren oder als kontinuierliches Verfahren durchgeführt werden. Wenn das Verfahren in Batch-Verfahren durchgeführt wird, so kann es grundsätzlich in beliebigen, vorzugsweise mit einer Rührapparatur ausgestatteten, beispielsweise beheizbaren Kesseln durchgeführt werden. Als Heizmittel kommen grundsätzlich alle Möglichkeiten in Betracht, mit denen sich der Inhalt eines entsprechenden Kessels derart Erwärmen lässt, dass der Inhalt eine entsprechende Schmelze bildet.

Wenn das erfindungsgemäße Verfahren kontinuierlich durchgeführt werden soll, so sind hierzu grundsätzlich alle Apparaturen geeignet, welche eine kontinuierliche Durchführung des erfindungsgemäßen Verfahrens ermöglichen. Beispielsweise sind dies Schleifenreaktoren und dergleichen.

Die Stabilisator-Schmelze kann darüber hinaus noch eine Vielzahl weiterer Verbindungen als Zusatzstoffe umfassen, die verschiedenen Aufgaben in der Schmelze oder im Produkt dienen. Die nachfolgend genannten Zusatzstoffe können grundsätzlich im Rahmen einer erfindungsgemäßen Schmelze eingesetzt werden. Es ist jedoch, beispielsweise in Abhängigkeit vom Gehalt der Schmelze an CaO oder Ca(OH)₂ oder beidem möglich, dass bestimmte nachfolgend genannten Zusatzstoffe nur bis zu einem bestimmten Gehalt der Schmelze an CaO oder Ca(OH)₂ oder beidem eingesetzt werden können. Eine Überprüfung dieses Sachverhaltes jedoch für den Fachmann ohne unzumutbaren Aufwand einfach möglich, indem ein bestimmter Zusatzstoff in Schmelzen mit verschiedenen Gehalt an CaO oder Ca(OH)₂ oder beidem eingebracht wird und sein Verhalten hinsichtlich einer gegebenenfalls auftretenden Zersetzung in der Schmelze überprüft wird.

Es sind dies z.B. die Aminouracilverbindungen der allgemeinen Formel I 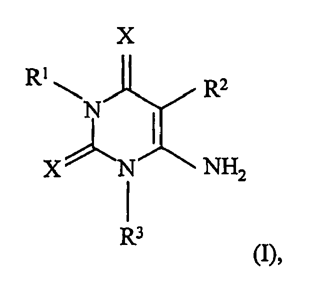 worin die Reste R¹ und R² jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R¹ für einen gegebenenfalls substituierten Acylrest mit 2 bis 44 C-Atomen steht, und der Rest R³ für Wasserstoff, einen gegebenenfalls substituierten linearen oder verzweigten, gesättigten oder ungesättigten aliphatischen Kohlenwasserstoffrest mit 1 bis 44 C-Atomen, einen gegebenenfalls substituierten gesättigten oder ungesättigten cycloaliphatischen Kohlenwasserstoffrest mit 6 bis 44 C-Atomen oder einen gegebenenfalls substituierten aromatischen Kohlenwasserstoffrest mit 6 bis 44 C-Atomen steht.

Als Zusatzstoffe eignen sich darüber hinaus generell Verbindungen mit einem Strukturelement der allgemeinen Formel II 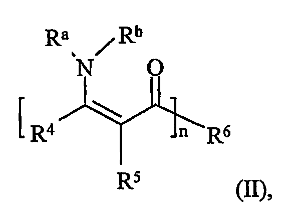 worin n für eine Zahl von 1 bis 100.000, die Reste R^{a}, R^{b}, R⁴ und R⁵ jeweils unabhängig voneinander für Wasserstoff, einen gegebenenfalls substituierten linearen oder verzweigten, gesättigten oder ungesättigten aliphatischen Alkylrest mit 1 bis 44 C-Atomen, einen gegebenenfalls substituierten gesättigten oder ungesättigten Cycloalkylrest mit 6 bis 44 C-Atomen oder einen gegebenenfalls substituierten Arylrest mit 6 bis 44 C-Atomen oder einen gegebenenfalls substituierten Aralkylrest mit 7 bis 44 C-Atomen stehen oder der Rest R⁴ für einen gegebenenfalls substituierten Acylrest mit 2 bis 44 C-Atomen steht oder die Reste R⁴ und R⁵ zu einem aromatischen oder heterocyclischen System verbunden sind und worin der Rest R⁶ für Wasserstoff, einen gegebenenfalls substituierten, linearen oder verzweigten, gesättigten oder ungesättigten aliphatischen Alkyl- oder Alkylenrest oder Oxyalkyl- oder Oxyalkylenrest oder Mercaptoalkyl- oder Mercaptoalkylenrest oder Aminoalkyl- oder Aminoalkylenrest mit 4 oder 5 oder 6 bis 44 C-Atomen, einen gegebenenfalls substituierten gesättigten oder ungesättigten Cycloalkyl- oder Cycloalkylenrest oder Oxycycloalkyl- oder Oxycycloallcylenrest oder Mercaptocycloalkyl- oder Mercaptocycloalkylenrest oder Aminocycloalkyl- oder Aminocycloalkylenrest mit 6 bis 44 C-Atomen oder einen gegebenenfalls substituierten Aryl- oder Arylenrest mit 6 bis 44 C-Atomen oder einen Ether- oder Thioetherrest mit 1 bis 20 O- oder S-Atomen oder O- und S-Atomen oder für ein Polymeres, das über O, S, NH, NR^{a} oder CH₂C(O) an n Stellen mit dem in Klammern stehenden Strukturelement verbunden ist, steht oder der Rest R⁶ mit dem Rest R⁴ so verbunden ist, dass insgesamt ein gegebenenfalls substituiertes, gesättigtes oder ungesättigtes heterocyclisches Ringsystem mit 4 bis 24 C-Atomen gebildet wird.

Die genannten Verbindungen können in einer erfindungsgemäßen Stabilisator-Schmelze jeweils alleine oder als Gemisch aus zwei oder mehr davon enthalten sein.

Als weitere Zusatzstoffe sind beispielsweise Verbindungen geeignet, die ein mercaptofunktionelles sp²-hybridisiertes C-Atom aufweisen, Carbazole, Carbazolderivate oder 2,4-Pyrrolidindion oder 2,4-Pyrrolidindion-Derivate.

Als Verbindungen, die mindestens ein mercaptofunktionelles, sp²-hybridisiertes C-Atom aufweisen eignen sich im Rahmen der vorliegenden Erfindung grundsätzlich alle Verbindungen, die ein Strukturelement Z=CZ-SH oder ein Strukturelement Z₂C=S aufweisen, wobei beide Strukturelemente tautomere Formen einer einzigen Verbindung sein können. Z steht dabei für beliebige Reste, die ZUsammen mit der Struktur C=S eine Verbindung mit mindestens einem sp²-hybridisierte C-Atom bilden. Z kann beispielsweise für lineare, verzweigte, gesättigte oder ungesättigte, aliphatische oder aromatische oder cyclische Strukturen stehen. Das sp²-hybridisierte C-Atom kann dabei Bestandteil einer gegebenenfalls substituierten aliphatischen Verbindung oder Bestandteil eines aromatischen Systems sein. Geeignete Verbindungstypen sind beispielsweise Thiocarbamidsäurederivate, Thiocarbamate, Thiocarbonsäuren, Thiobenzoesäurederivate, Thioacetonderivate oder Thioharnstoff oder Thioharnstoffderivate.

Ebenfalls als Zusatzstoffe eignen sich beispielsweise Epoxyverbindungen. Beispiele für derartige Epoxyverbindungen sind epoxidiertes Sojaöl, epoxidiertes Olivenöl, epoxidiertes Leinöl, epoxidiertes Rizinusöl, epoxidiertes Erdnussöl, epoxidiertes Maisöl, epoxidiertes Baumwollsamenöl sowie Glycidylverbindungen.

Besonders geeignete Epoxyverbindungen sind beispielsweise in der EP-A 1 046 668 auf den Seiten 3 bis 5 beschrieben, wobei auf die dort enthaltene Offenbarung ausdrücklich Bezug genommen wird und die als Bestandteil der Offenbarung des vorliegenden Textes betrachtet wird.

Weiterhin als Zusatzstoffe im Rahmen der vorliegenden Erfindung geeignet sind 1,3-Dicarbonylverbindungen, insbesondere die β-Diketone und β-Ketoester. Im Rahmen der vorliegenden Erfindung geeignet sind Dicarbonylverbindungen der allgemeinen Formel R'C(O)CHR"-C(O)R''', wie sie beispielsweise auf S. 5 der EP- 1 046 668 beschrieben sind, auf die insbesondere im Hinblick auf die Reste R', R" und R'" ausdrücklich Bezug genommen wird und deren Offenbarung als Bestandteil der Offenbarung des vorliegenden Textes betrachtet wird. Besonders geeignet sind hierbei beispielsweise Acetylaceton, Butanoylaceton, Heptanoylaceton, Stearoylaceton, Palmitoylaceton, Lauroylaceton, 7-tert-Nonylthioheptandion-2,4, Benzoylaceton, Dibenzoylinethan, Lauroylbenzoylmethan, Palmitoylbenzoylmethan, Stearoylbenzoylmethan, Isooctylbenzoylmethan, Tribenzoylmethan, Bis(4-methylbenzoyl)methan, Benzoyl-p-chlorbenzoylmethan, Benzoylformylinethan, Benzoylacetylphenylmethan, 1-Benzoyl-1-acetylnonan, Stearoyl-4-methoxybenzoylmethan, Bis(4-tert-butylbenzoyl)methan, Benzoylphenylacetylmethan, Bis(cyclohexanoyl)methan, Dipivaloylmethan, 2-Acetylcyclopentanon, 2-Benzoylcyclopentanon.

1,3-Diketoverbindungen können in einer Stabilisator-Schmelze in einer Menge von 0 bis zu etwa 20 Gew.-%, beispielsweise etwa 0,1 bis zu etwa 10 Gew.-%, enthalten sein.

Ebenfalls als Zusatzstoffe geeignet sind beispielsweise sterisch gehinderte Amine wie sie in der EP-A 1 046 668 auf den Seiten 7 bis 27 genannt werden. Auf die dort offenbarten sterisch gehinderten Amine wird ausdrücklich Bezug genommen, die dort genannten Verbindungen werden als Bestandteil der Offenbarung des vorliegenden Textes betrachtet.

Die als Zusatzstoffe geeigneten sterisch gehinderten Amine können in einer Stabilisator-Schmelze in einer Menge von bis zu etwa 30 Gew.-%, beispielsweise bis zu etwa 10 Gew.-% enthalten sein.
Eine Stabilisator-Schmelze kann darüber hinaus weiterhin als Zusatzstoff eine Organozinnverbindung oder ein Gemisch aus zwei oder mehr Organozinnverbindungen enthalten. Geeignete Organozinnverbindungen sind beispielsweise Methylzinn-tris-(isooctyl-thioglycolat), Methylzinn-tris-(isooctyl-3-mercaptopropionat), Methylzinn-tris-(isodecyl-thioglycolat), Dimethylzinn-bis-(isooctyl-thioglycolat), Dibutylzinn-bis-(isooctyl-thioglycolat), Monobutylzinn-tris-(isooctyl-thioglycolat), Dioctylzinn-bis-(isooctyl-thioglycolat), Monooctylzinn-tris-(isooctyl-thioglycolat) oder Dimethylzinn-bis-(2-ethylhexyl-β-mercaptopropionat).

Darüber hinaus sind im Rahmen der Stabilisator-Schmelze die in der EP-A 0 742 259 auf den Seiten bis 18 bis 29 genannten und in ihrer Herstellung beschriebenen Organozinnverbindungen einsetzbar. Auf die oben genannte Offenbarung wird ausdrücklich Bezug genommen, wobei die dort genannten Verbindungen und deren Herstellung als Bestandteil der Offenbarung des vorliegenden Textes verstanden werden.

Eine Stabilisator-Schmelze kann die beschriebenen Organozinnverbindungen in einer Menge von 0 bis zu etwa 40 Gew.-%, insbesondere etwa 0,1 bis etwa 20 Gew.-%, enthalten.

Im Rahmen einer weiteren Ausführungsform der vorliegenden Erfindung kann eine Stabilisator-Schmelze organische Phosphitester mit 1 bis 3 identischen, paarweise identischen oder unterschiedlichen organischen Resten enthalten. Geeignete organische Reste sind beispielsweise lineare oder verzweigte, gesättigte oder ungesättigte Alkylreste mit 1 bis 24 C-Atomen, gegebenenfalls substituierten Alkylreste mit 6 bis 20 C-Atomen oder gegebenenfalls substituierte Aralkylreste mit 7 bis 20 C-Atomen. Beispiele für geeignete organische Phosphitester sind Tris-(nonylphenyl)-, Trilauryl-, Tributyl-, Trioctyl-, Tridecyl-, Tridodecyl-, Triphenyl-, Octyldiphenyl-, Dioctylphenyl-, Tri-(octylphenyl)-, Tribenzyl-, Butyldikresyl-, Octyl-di(octylphenyl)-, Tris-(2-ethylhexyl)-, Tritolyl-, Tris-(2-cyclohexylphenyl)-, Tri-α-naphthyl-, Tris-(phenylphenyl)-, Tris-(2-phenylethyl)-, Tris-(dimethylphenyl)-, Trikresyl- oder Tris-(p-nonylphenyl)-phosphit oder Tristearyl-sorbit-triphosphit oder Gemische aus zwei oder mehr davon.

Eine Stabilisator-Schmelze kann die beschriebenen Phosphitverbindungen in einer Menge von 0 bis zu etwa 30 Gew.-%, insbesondere etwa 0,1 bis etwa 10 Gew.-%, enthalten.

Eine Stabilisator-Schmelze kann weiterhin als Zusatzstoffe blockierte Mercaptane enthalten, wie sie in der EP-A 0 742 259 auf den Seiten 4 bis 18 genannt werden. Auf die Offenbarung in der angegebenen Schrift wird ausdrücklich Bezug genommen, sie wird als Bestandteil der Offenbarung des vorliegenden verstanden.

Eine Stabilisator-Schmelze kann die beschriebenen blockierten Mercaptane in einer Menge von 0 bis zu etwa 30 Gew.-%, insbesondere etwa 0,1 bis zu etwa 10 Gew.-%, enthalten.

Ebenfalls als Zusatzstoffe für eine Stabilisator-Schmelze geeignet sind organische Weichmacher.

Als entsprechende Weichmacher geeignet sind beispielsweise Phosphorsäureester, wie sie im "Taschenbuch der Kunststoffadditive", Kapitel 5.9.5, S. 408-412 zu finden sind. Beispiele für geeignete Phosphorsäureester sind Tributylphosphat, Tri-2-ethylbutylphosphat, Tri-2-ethylhexylphosphat, Trichlorethylphosphat, 2-Ethyl-hexyl-diphenylphosphat, Triphenylphosphat, Trikresylphosphat oder Trixylenylphosphat, oder Gemische aus zwei oder mehr davon.

Im Rahmen einer weiteren Ausführungsform der vorliegenden Erfindung können die Stabilisator-Schmelzen Antioxidantien; UV-Absorber oder Lichtschutzmittel enthalten. Geeignete Antioxidantien sind beispielsweise in der EP-A 1 046 668 auf den Seiten 33 bis 35 beschrieben. Geeignete UV-Absorber und Lichtschutzmittel sind dort auf den Seiten 35 und 36 genannt. Auf beide Offenbarungen wird hier ausdrücklich Bezug genommen, wobei die Offenbarungen als Bestandteil des vorliegenden Textes betrachtet werden.

Eine Stabilisator-Schmelze kann weiterhin Füllstoffe wie sie im "Handbook of PVC Formulating", E. J. Wickson, John Wiley & Sons, Inc., 1993, auf den Seiten 393-449 beschrieben sind oder Verstärkungsmittel wie sie im "Taschenbuch der Kunststoffadditive", R. Gächter/H. Müller, Carl Hanser Verlag, 1990, Seiten 549-615 beschrieben sind, oder Pigmente enthalten.

Weiterhin als Zusatzstoffe in den Stabilisator-Schmelzen geeignet sind Hydrotalcite, Hydrocalumite, Zeolithe und Alkalialumocarbonate. Geeignete Hydrotalcite, Hydrocalumite, Zeolithe und Alkslialumocarbonate sind beispielsweise in der EP-A 1 046 668 auf den Seiten 27 bis 29, der EP-A 256 872 auf den Seiten 3, 5 und 7, der DE-C 41 06 411 auf Seite 2 und 3 oder der DE-C 41 06 404 auf Seite 2 und 3 oder der DE-C 198 60 798 beschrieben. Auf diese Druckschriften wird ausdrücklich Bezug genommen und deren Offenbarung wird als Bestandteil der Offenbarung des vorliegenden Textes betrachtet.

Eine Stabilisator-Schmelze kann darüber hinaus noch Schlagzähmodifikatoren und Verarbeitungshilfen, Geliermittel, Antistatika, Biozide, Metalldesaktivatoren, optische Aufheller, Flammschutzmittel sowie Antifoggingverbindungen enthalten. Geeignete Verbindungen dieser Verbindungsklassen sind beispielsweise in "Kunststoff Additive", R. Keßler/H. Müller, Carl Hanser Verlag, 3. Auflage, 1989 sowie im "Handbook of PVC Formulating", E.J. Wilson, J. Wiley & Sons, 1993 beschrieben.

Die Erfindung betrifft ein Konfektionierungsverfahren, wie oben beschrieben, bei dem als Produkt ein Stabilisator-Formkörper erhalten wird.

Diese Formkörper können grundsätzlich beliebig ausgestaltet sein. Geeignete Formen sind beispielsweise Pastillen, Schuppen, Kugeln, Zylinder und dergleichen.

Derartige Formen können durch bekannte Formgebungsverfahren erzeugt werden, z.B. dadurch, dass eine thermoplastische Masse in eine Form gegeben wird und dort unter Abkühlen oder Abkühlen lassen in der so gewonnenen Form fixiert wird, wie es z.B. beim Spritzgießen der Fall ist. Die Formgebung kann aber auch dadurch erfolgen, dass die thermoplastische Masse verteilt wird und sich beim Abkühlen in der so erlangten Form fixiert, - dies ist z.B. durch den Einsatz von Sprühtürmen möglich, bei dem im Wesentlichen kugelförmige Formen erhalten werden. Darüber hinaus ist es auch möglich, die thermoplastische Masse während des Erkaltens weiter in ihrer Form zu verändern, beispielsweise durch schuppen. Ebenfalls geeignet sind beispielsweise Pastillierverfahren wie sie durch Rotoformer (Fa. Sandvik) oder Rollomaten (Fa. Kaiser) durchführbar sind.

Ebenfalls geeignet ist auch ein "Verfropfung" genanntes Verfahren. Bei diesem Verfahren wird die Stabilisator-Schmelze mit Hilfe einer mit Löchern versehenen, vibrierenden Platte zu Tropfen geformt. Die Platte vibriert dabei in Richtung der Plattennormalen, wobei in Abhängigkeit von der Viskosität der Schmelze und der Vibrationsfrequenz besonders regelmäßig geformte Tropfen mit einer engen Größenverteilung erhalten werden können.

Zur Durchführung dieses Verfahrens geeignet ist beispielsweise die Anlage Mini-Droppo-line der Firma Rieter Automatik GmbH in Grossostheim (Deutschland). Beispielsweise wird dabei mit einer Vibrationsfrequenz von etwa 100 - 500 Hz, beispielsweise etwa 250 bis etwa 400 Hz, einem Düsendurchmesser von etwa 200 bis 600 µm, insbesondere einem Düsendurchmesser von etwa 250 bis etwa 400 µm, einem Druck (je nach Viskosität der Schmelze) von etwa 0,4 bis etwa 5 bar, und einer in einem Intervall von etwa -10 bis etwa +10 °C um den Schmelzpunkt der Schmelz liegenden Düsentemperatur.

Im Rahmen einer weiteren bevorzugten Ausführungsform der vorliegenden Erfindung werden die Tropfen vor dem Auftreffen auf eine Auffangvorrichtung gekühlt.

Damit die so erhaltenen Formkörper bei ihrem späteren Einsatz gut handhabbar sind, also z.B. gute Fördereigenschaften aufweisen, sind solche Formen bevorzugt, die ein leichtes Schütten und/oder Fördern unter Einsatz von Unter- bzw. Überdruck oder Kombinationen von beidem ermöglichen. Besonders bevorzugt sind dabei Kugelformen oder Pastillenformen.

Ein Verfahren, wie oben beschrieben, bei dem die zu pastillierenden Bestandteile in einen Behälter gegeben werden, diese mit Hilfe eines Heizmittels erschmolzen werden und aus dieser Stabilisator-Schmelze Stabilisator-Formkörper hergestellt werden, ist ein Gegenstand der vorliegenden Erfindung.

Beim Erschmelzen werden Temperaturen von mehr als 100 °C, vorzugsweise mehr als 110 °C, besonders bevorzugt mehr als 120 °C, wie 130 °C, 140 °C oder 150 °C erreicht. Dies kann durch Verwendung üblicher Heizmittel erreicht werden, also z.B. durch elektrisches Erwärmen, durch beheizen mit einer Flamme, Dampf oder Öl oder durch das Bestrahlen mit elektromagnetischen Wellen, wie Mikrowellen, Induktionsbeheizung aber auch dadurch, dass verschiedene Bestandteile zusammengegeben werden, die in der Stabilisator-Schmelze exotherm miteinander reagieren und dabei einen gewünschten oder zumindest nicht störenden Stabilisator-Schmelzenbestandteil bilden.

Die erfindungsgemäß hergestellten Formkörper können z.B. mit einem oder mehreren Polymeren vermischt werden, die stabilisiert werden müssen, um im Langzeitgebrauch und insbesondere bei der Verarbeitung keine unerwünschten Veränderungen zu zeigen. Dabei erfordern eine solche Stabilisierung insbesondere halogenhaltige organische Polymere.

Beispiele für derartige halogenhaltige organische Polymere sind Polymere des Vinylchlorids, Vinylharze, die Vinylchlorideinheiten im Polymerrückgrat enthalten, Copolymere von Vinylchlorid und Vinylestern aliphatischer Säuren, insbesondere Vinylacetat, Copolymere von Vinylchlorid mit Estern der Acryl- und Methacrylsäure oder Acrylnitril oder Gemischen aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, Polymere des Vinylchloracetats und Dichlordivinylethers, chlorierte Polymere des Vinylacetats, chlorierte polymere Ester der Acrylsäure und der α-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der obengenannten Polymeren enthalten.

Ebenfalls zur Stabilisierung mit den erfindungsgemäß hergestellten Stabilisator-Formkörpern geeignet sind die Pfropfpolymerisate von PVC mit EVA, ABS oder MBS. Bevorzugte Substrate für derartige Propfcopolymere sind außerdem die vorstehend genannten Homo- und Copolymerisate, insbesondere Mischungen von Vinylchlorid-Homopolymerisaten mit anderen thermoplastischen oder elastomeren Polymeren, insbesondere Blends mit ABS, MBS, NBR, SAN, EVA, CPE, MBAS, PAA (Polyalkylacrylat), PAMA (Polyalkylmethacrylat), EPDM, Polyamiden oder Polylactonen.

Ebenfalls zur Stabilisierung mit den erfindungsgemäß erhältlichen Stabilisator-Formkörpern geeignet sind Gemische von halogenierten und nicht-halogenierten Polymeren, beispielsweise Gemische der oben genannten nicht-halogenierten Polymeren mit PVC, insbesondere Gemische von Polyurethanen und PVC.

Weiterhin können mit den erfindungsgemäß hergestellten Stabilisator-Formkörpern auch Rezyklate chlorhaltiger Polymere stabilisiert werden, wobei grundsätzlich alle Rezyklate der obengenannten, halogenierten Polymeren hierzu geeignet sind. Geeignet ist im Rahmen der vorliegenden Erfmdung beispielsweise PVC-Rezyklat.

Neben dieser Verwendung der erfindungsgemäß hergestellten Stabilisator-Formkörper wird auch ein Verfahren zur Stabilisierung halogenhaltiger Polymerer, bei dem ein halogenhaltiges Polymeres oder ein Gemisch aus zwei oder mehr halogenhaltige Polymeren oder ein Gemisch aus einem oder mehreren halogenhaltige Polymeren und einem oder mehreren halogenfreien Polymeren mit mindestens einem erfindungsgemäßen Stabilisator-Formkörper vermischt wird, beschrieben.

Die Vermischung von Polymerem oder Polymeren und erfindungsgemäß hergestellten Stabilisator-Formkörpern kann grundsätzlich zu jedem beliebigen Zeitpunkt vor oder während der Verarbeitung des/der Polymeren erfolgen. So können z.B. die Stabilisator-Formkörper dem in Pulver- oder Granulatform vorliegenden Polymeren vor der Verarbeitung zugemischt werden. Es ist jedoch ebenso möglich, die Stabilisator-Formkörper dem Polymeren oder den Polymeren in erweichtem oder geschmolzenem Zustand, beispielsweise während der Verarbeitung in einem Extruder zuzusetzen.

Eine Polymerzusammensetzung, mindestens enthaltend ein halogenhaltiges, organisches Polymeres und die in einem Verfahren, wie oben beschrieben, eingesetzten Stabilisierungs-Bestandteile oder die Stabilisierungs-Bestandteile der erfindungsgemäßen Stabilisator-Schmelze oder die Stabilisierungs-Bestandteile eines erfmdungsgemäßen Stabilisator-Formkörpers wird ebenfalls beschrieben.

Im Rahmen der vorliegenden Erfindung kann eine Polymerzusammensetzung die Bestandteile der erfindungsgemäß hergestellten Stabilisator-Formkörper in einer Menge von 0,1 bis 20 phr, insbesondere etwa 0,5 bis etwa 15 phr oder etwa 1 bis etwa 12 phr enthalten. Dabei sind Werte von mindestens 0,3 phr, wie mindestens etwa 0,4 oder mindestens etwa 0,75 phr bevorzugt. Die Einheit phr steht für "per hundred resin" und betrifft damit Gewichtsteile pro 100 Gewichtsteile Polymeres.

Vorzugsweise enthält eine Polymerzusammensetzung als halogeniertes Polymeres zumindest teilweise PVC, wobei der PVC-Anteil insbesondere mindestens etwa 20, vorzugsweise mindestens etwa 50 Gew.-%, beispielsweise mindestens etwa 80 oder mindestens etwa 90 Gew.-% beträgt.

Besonders bevorzugt ist demnach eine Polymerzusammensetzung, welche die Stabilisierungs-Bestandteile, also die Bestandteile der erfindungsgemäß hergestellten Stabilisator-Formkörper, in einer Menge von 0,1 bis etwa 30 Gew.-% enthält.

Eine Polymerzusammensetzung kann auf bekannte Weise in eine gewünschte Form gebracht werden. Geeignete Verfahren sind beispielsweise Kalandrieren, Extrudieren, Spritzgießen, Sintern, Extrusions-Blasen oder das Plastisol-Verfahren. Eine Polymerzusammensetzung kann beispielsweise auch zur Herstellung von Schaumstoffen verwendet werden. Grundsätzlich eignen sich die erfindungsgemäßen Polymerzusammensetzung zur Herstellung von Hart- oder insbesondere Weich-PVC.

Der Begriff "Formkörper" umfasst im Rahmen der vorliegenden Erfindung grundsätzlich alle dreidimensionalen Gebilde, die aus einer Polymerzusammensetzung herstellbar sind.

Der Begriff "Formkörper" umfasst im Rahmen der vorliegenden Erfindung beispielsweise Drahtummantelungen, Automobilbauteile, beispielsweise Automobilbauteile wie sie im Innenraum des Automobils, im Motorraum oder an den Außenflächen eingesetzt werden, Kabelisolierungen, Dekorationsfolien, Agrarfolien, Schläuche, Dichtungsprofile, Bürofolien, Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Platten, Schaumplatten., Coextrudate mit recyceltem Kern oder Gehäuse für elektrische Apparaturen oder Maschinen, beispielsweise Computer oder Haushaltsgeräte. Weitere Beispiele für aus einer erfindungsgemäßen Polymerzusammensetzung herstellbare Formkörper sind Kunstleder, Bodenbeläge, Textilbeschichtungen, Tapeten, Coil-Coatings oder Unterbodenschutz für Kraftfahrzeuge.

## Patentansprüche

1. Verfahren zur Konfektionierung von CaO oder Ca(OH)₂ oder beides enthaltenden Schmelzen, bei dem eine CaO oder Ca(OH)₂ oder beides und mindestens eine organische Verbindung oder ein Gemisch aus zwei oder mehr solcher Verbindungen mit einem Schmelzpunkt oder Erweichungspunkt von weniger als 200 °C enthaltende Schmelze portioniert und anschließend unter Erhalt eines Schmelzformkörpers abgekühlt wird, wobei die Schmelze höchstens 10 Gew.-% eines oder mehrerer Polyole und höchstens 10 Gew.-% eines oder mehrerer langkettiger Ester enthält, und wobei der Anteil an CaO oder Ca(OH)₂ oder beidem 2 bis 80 Gew.-% beträgt, bezogen auf den Anteil an organischer Verbindung mit einem Schmelzpunkt oder Erweichungspunkt von weniger als 200 °C und CaO oder Ca(OH)₂ oder beidem in der Schmelze, und wobei unter einem langkettigen Ester ein Ester verstanden wird, wie er durch Reaktion einer geeigneten organischen Säure mit einem geeigneten Alkohol in dem Fachmann bekannter Weise erhalten werden kann, und wobei beide Kohlenstoffgruppen in Säure bzw. Alkohol jeweils mindestens 4 Kohlenstoffatome umfassen.

2. Verfahren nach Anspruch 1, **dadurch gekennzeichnet, dass** die Schmelze mindestens eine Zinkverbindung enthält.

3. Verfahren nach Anspruch 1 oder 2, **dadurch gekennzeichnet, dass** die Schmelze weniger als 1 Gew.-% Polyole oder weniger als 1 Gew.-% Ester oder weniger als 1 Gew.-% Polyole und weniger als 1 Gew.-% Ester enthält.

4. Verfahren nach einem der Ansprüche 1 bis 3, **dadurch gekennzeichnet, dass** die Schmelze weniger als 0,1 Gew.-% Polyole oder weniger als 0,1 Gew.-% Ester oder weniger als 0,1 Gew.-% Polyole und weniger als 0,1 Gew.-% Ester enthält.

5. Verfahren nach einem der Ansprüche 1 bis 4, bei dem es sich bei dem Schmelzformkörper im Wesentlichen um Pastillen, Schuppen, Kugeln oder Zylinder handelt.

6. Verfahren nach einem der Ansprüche 1 bis 5, **dadurch gekennzeichnet, dass** die zu konfektionierenden Bestandteile in einen Behälter gegeben werden, diese geschmolzen werden und aus dieser Schmelze Schmelzformkörper hergestellt werden.

## Claims

1. Process for pelletizing melts containing CaO or Ca(OH)₂ or both, in which a melt containing CaO or Ca(OH)₂ or both and at least one organic compound or a mixture of two or more such compounds having a melting point or softening point of less than 200°C is divided into portions and subsequently cooled to give a shaped body of the melt, wherein the melt contains not more than 10% by weight of one or more polyols and not more than 10% by weight of one or more long-chain esters and the proportion of CaO or Ca(OH)₂ or both is from 2 to 80% by weight, based on the content of organic compound having a melting point or softening point of less than 200°C and CaO or Ca(OH)₂ or both in the melt, where a long-chain ester is an ester which can be obtained in a manner known to those skilled in the art by reaction of a suitable organic acid with a suitable alcohol and the two carbon groups in the acid and alcohol each have at least 4 carbon atoms.

2. Process according to Claim 1, **characterized in that** the melt contains at least one zinc compound.

3. Process according to Claim 1 or 2, **characterized in that** the melt contains less than 1% by weight of polyols or less than 1% by weight of esters or less than 1% by weight of polyols and less than 1% by weight of esters.

4. Process according to any of Claims 1 to 3, **characterized in that** the melt contains less than 0.1% by weight of polyols or less than 0.1% by weight of esters or less than 0.1% by weight of polyols and less than 0.1% by weight of esters.

5. Process according to any of Claims 1 to 4, wherein the shaped bodies of the melt are essentially pastilles, flakes, spheres or cylinders.

6. Process according to any of Claims 1 to 5, **characterized in that** the constituents to be pelletized are introduced into a vessel, melted in the latter and shaped bodies are produced from this melt.

## Revendications

1. Procédé pour la mise en forme de masses fondues contenant du CaO ou du Ca(OH)₂ ou les deux, dans lequel on divise en portions une masse fondue contenant du CaO ou du Ca(OH)₂ ou les deux et au moins un composé organique ou un mélange de deux ou plus de deux composés de ce type, ayant un point de fusion ou un point de ramollissement inférieur à 200°C et ensuite on la refroidit pour obtenir un corps moulé de masse fondue, la masse fondue contenant au maximum 10 % en poids d'un ou plusieurs polyols et au maximum 10 % en poids d'un ou plusieurs esters à longue chaîne, et la teneur en CaO ou Ca(OH)₂ ou les deux valant de 2 à 80 % en poids, par rapport à la quantité du composé organique ayant un point de fusion ou un point de ramollissement inférieur à 200°C et de CaO ou Ca(OH)₂ ou des deux dans la masse fondue, et par un ester à longue chaîne il faut entendre un ester tel qu'il peut être obtenu de la façon connue de l'homme de métier, par réaction d'un acide organique approprié avec un alcool approprié, et les deux groupes carbonés dans l'acide ou l'alcool comprenant chacun au moins 4 atomes de carbone.

2. Procédé selon la revendication 1, **caractérisé en ce que** la masse fondue contient au moins un composé à base de zinc.

3. Procédé selon la revendication 1 ou 2, **caractérisé en ce que** la masse fondue contient moins de 1 % en poids de polyols ou moins de 1 % en poids d'esters ou moins de 1 % en poids de polyols et moins de 1 % en poids d'esters.

4. Procédé selon l'une quelconque des revendications 1 à 3, **caractérisé en ce que** la masse fondue contient moins de 0,1 % en poids de polyols ou moins de 0,1 % en poids d'esters ou moins de 0,1 % en poids de polyols et moins de 0,1 % en poids d'esters.

5. Procédé selon l'une quelconque des revendications 1 à 4, dans lequel le corps moulé de masse fondue consiste essentiellement en pastilles, écailles, sphères ou cylindres.

6. Procédé selon l'une quelconque des revendications 1 à 5, **caractérisé en ce qu'**on introduit dans un récipient les composants à mettre en forme, on les fait fondre et à partir de cette masse fondue on produit des corps moulés de masse fondue.
